# EUROPEAN PATENT SPECIFICATION

(11) **EP 0 937 220 B1**
(45) Date of publication and mention of the grant of the patent: **10.01.2001**
(21) Application number: 97945092.1
(22) Date of filing: 14.10.1997
(51) Int. Cl.: F24D 3/16

(54) **PROCESS FOR THE PRODUCTION OF RADIATING PANELS MADE OF COMPOSITE MATERIAL**
VERFAHREN ZUR HERSTELLUNG VON STRAHLUNGSPANELEN AUS VERBUNDWERKSTOFFEN
PROCEDE POUR LA PRODUCTION DE PANNEAUX RAYONNANTS FAITS DE MATERIAU COMPOSITE

(30) Priority: 22.10.1996 IT VR960089
(43) Date of publication of application: 25.08.1999
(73) Proprietor: Stone Italiana S.R.L., 37040 Zimella (IT)
(72) Inventor: DALLA VALLE, Roberto, I-37012 Bussolengo (IT)
(74) Representative: Petraz, Gilberto Luigi
(86) International application number: IT9700246
(87) International publication number: WO9817954

(56) References cited:
- EP-A- 0 655 585
- WO-A-97/36734
- DE-A- 4 209 124
- DE-A- 4 327 705
- DE-U- 9 404 687

## Description

### TECHNICAL FIELD

The present invention relates to a process for the production on industrial scale of radiating panels, slabs or tiles made of composite material, particularly of a material generally constituted by mixtures of marble and/or quartz and/or sands and/or resin binders and/or granite, besides eventually comprising any kind of intrusions such as metallic elements, glass, wood, etc., said radiating panels, slabs or tiles comprising a pipe buried inside of them and suitable to be connected to a heating circuit.

Moreover, the invention relates to radiating panels, slabs or tiles obtained by said process.

The invention is particularly suitable to be applied to the industry of working of marble, stone, granite and the like, as well as the thermal-mechanical industry.

### BACKGROUND ART

A process is known in the art for the production of panels or slabs made of composite material, e.g. constituted by marble and/or sands and/or quartz and/or any kind of intrusions (metals, glass, ceramic, wood, precious stones, etc.), or by granites, quartzs or sands mixed with predetermined amounts of resin binders.

Such a process comprises different working steps and, more particularly:
- a first step of crushing the different materials constituting the composite material;
- a second step of mixing the crushed materials in order to obtain a product as much homogeneous as possible, the resin binders being added during said step;
- a third step including pressing and compacting the composite material, the desired shape being achieved during said step;
- a fourth step of hardening the panel at a predetermined temperature;
- a fifth step of smoothing and polishing the two panel faces;
- a sixth step of cutting to size, of chamfering, sizing, flaring of the panel, followed by the discharge of the final products.

Such a process as described above allows panels, slabs or tiles made of composite material to be obtained having carefully predetermined lenghts, widths and thicknesses, and it is continuously carried out in a suitable plant.

The process described above is generally carried out for the production of slabs to be used for internally or externally covering or tiling walls and/or floors.

In the field of heating of rooms, the use of metallic radiating panels is well known and these panels usually comprise a pipe inside of which flows a fluid coming from a heat production system; said panels are normally vertically placed against a wall.

Floor heating systems are also known, said systems being generally realized according to two different methods.

According to a first technical solution, a metallic pipe, inside of which flows a heating fluid, is arranged on the floor to be heated and then buried in a concrete casting. Successively, the concrete casting surface is smoothed and a suitable tile covering is glued to the floor, said tiles being of any kind of material (e.g. marble, stone, granite, ceramic, brickwork, wood, etc.).

This solution involves drawbacks and disadvantages due to a complex and difficult laying operation of the floor. Besides, in case of leakages it is necessary to take off the whole floor to locate and remove the damages.

According to another solution known in the art, a set of synthetic elements is laid on the floor, said elements being internally provided with a pipe coil; the ends of such a pipe coil are provided with suitable pipe fittings suitable for connecting in series the different parts of the pipe coil when said synthetic elements are placed adjacent to each other.

Following to the laying of said elements, the floor obtained by means of this method is then covered by a concrete casting on which the ultimate floor constituted by tiles made of any material is finally laid.

The laying of such a kind of floor heating system requires a very long working time. Moreover, also in this case, to remove any eventual leakage it is necessary to take off all the floor tiles, and to destroy the concrete covering (what normally causes damages to the underlying heating elements).

Thus, a leakage problem in the floor heating systems known in the art, can inevitably be solved by a complete removal and substitution of the heating system, operations which are very expensive.

Document DE-A-4,209,124 discloses a heating element constituted by an electrical circuit inserted inside of an artificial material, the heating supply being obtained by means of a suitable current flowing in said circuit.

Document DE-U-9,404,687 discloses a process according to which a mineral casting is carried out in order to obtain a suitable element provided with a series of hollows, the pipes of a hydraulic circuit being successively introduced inside of said hollows.

### DESCRIPTION OF THE INVENTION

The present invention aims to obviate to the drawbacks and disadvantages of the prior art by providing a process for the production of radiating panels, slabs or tiles suitable for being advantageously used either as elements for the heat radiation in thermal plants or as elements of heated floors and/or of heated coverings for internal buildings walls.

This is achieved by means of the features described in claim 1.

The dependent claims outline forms of embodiment particularly advantageous of the process according to the present invention.

Moreover, claim 5 describes a radiating panel or slab or tile made of composite material advantageously obtained by means of the process according to the invention.

According to an essential feature of the invention, during the pressing and compacting step of the process for the production of panels, slabs or tiles a pipe is buried inside of the composite material, said pipe being generally a pipe coil the ends of which, in use, project outside of the panel surface.

The other process steps are identical to the ones of the processes known in art for the production of slabs or panels made of composite material.

At last, the final result is a panel, a slab or a tile inside of which is arranged a pipe, the ends of which project outside of the surface of the tile, slab or panel.

These panels or slabs can individually be used with the same purposes of the traditional cast iron radiators. In fact, the composite material presents excellent thermal conductivity properties.

Moreover, each panel obtained by means of such a process can be provided on its external surface with particular figures, inlays, bas-relieves, any kind of intrusion, thus creating a sophisticated domestic furniture component.

In this case the heating system can present particular aesthetic features which may even be very different from those which are usually present in domestic rooms. In fact, the panels or slabs can be decorated on both sides and placed in positions even very different from the traditional ones, i.e. the panels or slabs can be placed in the center of domestic rooms and not only leant against the walls, thus becoming aestetically attractive and very important furniture components while still carrying out their heating function.

In this case the tiles according to the present invention are used for a floor heating system, said tiles have only to be placed and glued to the base block, by connecting the pipes in series so as to obtain the whole heating system.

Thus, the laying costs and time are remarkably reduced as regards the traditional methods; besides, if a leakage appears only the damaged tile is removed and there is no need to take off the whole floor.

### ILLUSTRATION OF THE DRAWINGS

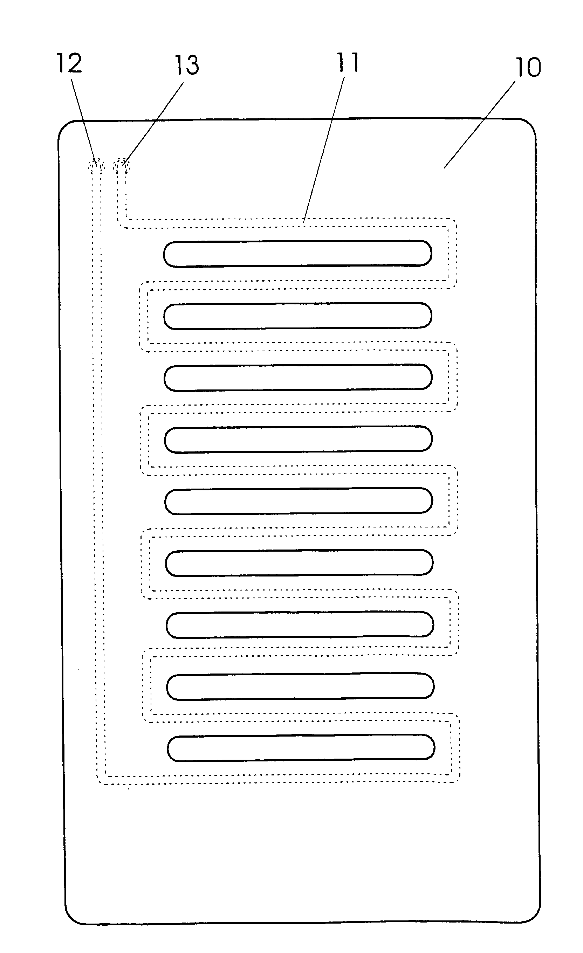

Other features and advantages of the invention will become apparent while reading the following description, which has been given as a non-limiting example, with the help of the figure illustrated in the attached drawing, which shows a schematical frontal view of a radiating panel according to the invention.

### DESCRIPTION OF A PREFERRED FORM OF EMBODIMENT

In the figure, reference sign 10 generally indicates a radiating panel made of composite material produced by means of the process according to the present invention.

The materials used to produce on industrial scale said panels can usually be mixtures of:
- marbles, of any kind and colour, combined with resin binders;
- marbles combined with a predeterminated percentage of quartz;
- marbles combined with a predeterminated percentage of sands;
- sands combined with resin binders;
- quartzs combined with resin binders;
- granites combined with resin binders;
- marbles in which metal, glass, ceramic, wood, precious stones, etc. are introduced during the process.

According to a per se known technique, the process for the production of panels or slabs 10 can be carried out in an automatic plant in which one or more computers control and govern every working step.

The first process step relates to the crushing into small scabblings of the various products constituting the composite material to be produced.

This is true in case where marble or granite is present; on the other hand sands are generally available in any shape or dimension.

During a second step the crushed products are mixed together in a suitable mixing device wherein the resin binder is added.

In a third step, the mixed product is poured into a die of a pressing device which gives to the panel or slab or tile a predetermined shape, generally a quadrangular shape, a predetermined thickness and a predetermined density by means of the application of a pressing force applied to the product and by means of the working of a vibrator device and of a device suitable to create a vacuum.

According to the invention pipe 11, generally a metallic pipe and with a pipe coil configuration, as shown in the figure, or with any other desired configuration, e.g. a spiral, is arranged inside of the pressing die before the pouring in said die of the mixed product to be pressed.

Possible support elements can be arranged on the base of the die so as to avoid any eventual bending in the central portion of pipe coil 11.

Pipe coil ends 12, 13 are provided with a closing plug and placed next to each other so that they can be connected to the pipelines of a heating system.

Following to the pressing step, pipe 11 is buried into the compacted composite material, while said ends 12, 13 project outside of panel surface 10.

Then the process is carried out according to traditional and known production steps.

Therefore, first of all panel 10 is conveyed inside of a oven wherein, thanks to the action of chemical coadjuvants, the panel is hardened according to carefully predetermined temperature and oven stay time values.

Then panel 10 comes out from the oven and is conveyed towards further working stations for the successive treatments of smoothing and polishing of one or both of the major sides, of cutting to size according to the desired working shape, of chamfering, sizing, flaring, of possible decoration of the external panel faces, and then it is conveyed to possible waxing, drying, packaging stations.

From the foregoing, it appears that the process according to the present invention allows radiating panels or slabs to be produced, on one hand, substantially carry out the traditional functions of cast iron radiators, and, on the other hand, constitute sophisticated furniture components thanks to the materials used in said process.

Instead, in the case where the process according to the invention is used to produce tile elements for a floor heating system (or for a wall heating system), the tiles produced by means of said process need only to be glued to the base block or to the wall, and the ends of each pipe portion need only to be connected in series to realize the heating system.

This is very advantageous in the terms of reducing the costs of laying such elements and of removal of any eventual fault mentioned above.

The invention has previously been described with reference to a particularly advantageously form of embodiment thereof.

However, it appears to be clear that the invention is not limited to this form of embodiment, and that it comprises several equivalent forms of embodiment.

For instance, according to a further form of embodiment of the production method the pipe is not introduced inside of the pressing die before the filling of the material to be compacted.

In this case, the process is characterized by a first introduction and distribution of a predetermined amount of material, then by the laying of the pipe and, finally, by the filling of the die with a further amount of composite material.

In this case there is no need of support elements for keeping the pipe in a central portion of the panel.

## Claims

1. Process for the production on an industrial scale of panels, slabs or tiles (10) made of composite material constituted by products comprising powders of marble and/or granite and/or sands and/or quartz and resin binders, eventually including elements made of metal, glass, ceramic, wood, precious stones, comprising the following working steps:
a) crushing of the products constituting said panels or slabs (10);
b) mixing of said constitutive products;
c) pressing into a die said products to obtain a predetermined shape and predetermined dimensions of said panels, slabs or tiles;
wherein during said step c) said products are vibro-compacted under vacuum conditions and a pipe (11) suitable for being connected to a heating system and having a development according to a predetermined pattern is positioned in the pressing die of the products which have been mixed in step b), the ends (12, 13) of said pipe (11) being at the same level or projecting outside of the surface of the pressed panel or slab or tile (10) so that they can be connected with a heating system or with other similar panels, slabs or tiles.

2. Process according to claim 1, wherein said process is carried out by means of an automatic plant comprising a set of automatic machines the operation of which is controlled by means of a suitable computer, said machines being suitable to carry out said working steps.

3. Process according to anyone of the preceding claims, wherein said pipe (11) is supported by suitable support elements placed on the base of the pressing die.

4. Process according to claims 1 or 2, wherein said pipe (11) is introduced in the die after the distribution on the surface thereof of a predetermined quantity of material to be pressed, and in that the pipe (11) is successively covered with a further quantity of material before pressing the die.

5. Panel or slab or tile (10) suitable to be used as radiating element connected with a heating system and comprising a pipe (11) to be connected to such heating system, said pipe being buried inside of a manufactured article made of a composite material constituted by products comprising powders of marble and/or granite and/or sands and/or quartz and resin binders, possibly including elements made of metal, glass, ceramic, wood, precious stones, whereby the ends (12, 13) of the pipe (11) are placed at the same level or project outside of the surface of said panel, slab or tile (10), wherein said panel or slab or tile (10) is manufactured by means of a process according to anyone of the preceding claims.

## Patentansprüche

1. Industrielles Herstellungsverfahren von Paneelen, Platten oder Fliesen (10) aus Agglomeratmaterial, das aus Produkten besteht, die aus Marmor- und/oder Granit- und/oder Sand- und/oder Quarzkörnchen und harzhaltigen Bindemitteln zusammengesetzt sind, ggf. mit Einschlüssen von Elementen aus Metall, Glas, Keramik, Holz und Edelsteinen, das die folgenden Arbeitsphasen umfasst:
a) Grobmahlung der Produkte, die die Paneele oder Platten (10) bilden;
a) Mischen der aus der Grobmahlung hervorgegangenen Produkte;
b) Pressen der genannten Produkte in einer Matrize, um eine festgelegte Form und die vorgegebenen Abmessungen dieser Paneele, Platten oder Fliesen zu erzielen;
wobei besagte Produkte in diesem Verfahren während der Phase c) unter Vakuum vibrokompaktiert sind, und ein Rohr (11) zum Anschluss an eine thermische Anlage mit einer Konfiguration gemäß einem vorher festgelegten Schema in der Pressmatrize der in Phase b) gemischten Produkte angeordnet wird, wobei die Enden (12, 13) dieses Rohrs (11) auf derselben Ebene mit und/oder von der Oberfläche des Paneels oder Platte oder Fliese (10) herausragen, die jeweils so gepresst sind, dass sie an eine thermische Anlage oder an andere gleichartige Paneele oder Fliesen oder Platten angeschlossen werden kann.

2. Verfahren nach Anspruch 1, dadurch gekennzeichnet, dass das Verfahren mittels einer automatischen Anlage, die eine Reihe automatischer Maschinen umfasst, ausgeführt wird, deren Betrieb von einem entsprechenden Rechner gesteuert wird, wobei diese Maschinen in der Lage sind, alle genannten Phasen durchzuführen.

3. Verfahren nach einem der vorherigen Ansprüche, dadurch gekennzeichnet, dass das Rohr (11) von geeigneten Stützelementen getragen wird, die an der Basis der Pressmatrize angeordnet sind.

4. Verfahren nach einem der Ansprüche 1 oder 2, dadurch gekennzeichnet, dass das Rohr (11) nach der Verteilung einer bestimmten zu pressenden Materialmenge auf die Oberfläche der Matrize in dieselbe gegeben wird, und dadurch, dass das Rohr (11) anschließend von einer weiteren Materialmenge bedeckt wird, noch bevor das Pressen der Matrize ausgeführt wird.

5. Paneel oder Fliese oder Platte (10) zur Verwendung als an eine thermische Anlage angeschlossenes Strahlelement, das ein Rohr (11) für den Anschluss an die thermische Anlage umfasst, wobei das Rohr in das Innere eines aus Agglomeratmaterial hergestellten Fabrikats eingebettet ist, wobei das Agglomeratmaterial aus Produkten zusammengesetzt ist, die aus Marmor- und/oder Granit- und/oder Sand- und/oder Quarzkörnchen und harzhaltigen Bindemitteln gebildet sind, ggf. mit Einschlüssen von Elementen aus Metall, Glas, Keramik, Holz und Edelsteinen, in dem die Enden (12, 13) des Rohrs (11) auf derselben Ebene liegen bzw. über die Oberfläche des Paneels, Platte oder Fliese (10) herausragen, wobei Paneel, Platte oder Fliese (10) durch ein Herstellungsverfahren nach jedem beliebigen der vorherigen Ansprüche gefertigt ist.

## Revendications

1. Procédé de fabrication en série de panneaux, dalles ou tuiles (10) fabriqués à partir d'un matériau composite constitué de produits comprenant des poudres de marbre et/ou de granite et/ou de sables et/ou de quartz et de liants résineux, incluant éventuellement des éléments en métal, en verre, en céramique, en bois, en pierres précieuses, comprenant les étapes de fabrication suivantes consistant à :
a) broyer les produits constituant lesdits panneaux ou dalles (10) ;
b) mélanger lesdits produits constitutifs ;
c) presser dans une matrice lesdits produits pour réaliser lesdits panneaux, dalles ou tuiles en leur conférant une forme prédéterminée et des dimensions prédéterminées ;
dans lequel pendant ladite étape c) lesdits produits sont compactés sous vide par un compacteur vibrant et un tuyau (11) approprié pour être relié à un système chauffant et conformé suivant un modèle prédéterminé est positionné dans la matrice de pressage des produits qui ont été mélangés à l'étape b), les extrémités (12, 13) dudit tuyau (11) étant au même niveau ou s'étendant à l'extérieur de la surface du panneau ou de la dalle ou de la tuile pressé (10) de façon à pouvoir les relier à un système chauffant ou à d'autres panneaux, dalles ou tuiles similaires.

2. Procédé selon la revendication 1, dans lequel ledit procédé est réalisé au moyen d'une installation automatique comprenant un ensemble de machines automatiques dont l'opération est commandée au moyen d'un calculateur approprié, lesdites machines étant appropriées pour exécuter lesdites étapes de fabrication.

3. Procédé selon l'une quelconque des revendications précédentes, dans lequel ledit tuyau (11) est supporté par des éléments de support appropriés placés sur le socle de la matrice de pressage.

4. Procédé selon les revendications 1 ou 2, dans lequel ledit tuyau (11) est introduit dans la matrice après avoir réparti sur surface de celle-ci une quantité prédéterminée de matière à presser, et dans lequel le tuyau (11) est ensuite recouvert d'une autre quantité de matière avant le pressage de la matrice.

5. Panneau ou dalle ou tuile (10) approprié pour être utilisé comme élément radiant relié à un système chauffant et comprenant un tuyau (11) à relier à un tel système chauffant, ledit tuyau étant enfoui à l'intérieur d'un article fabriqué en matière composite constituée de produits comprenant des poudres de marbre et/ou de granite et/ou de sables et/ou de quartz et de liants résineux, incluant éventuellement des éléments en métal, en verre, en céramique, en bois, en pierres précieuses, de sorte que les extrémités (12, 13) du tuyau (11) sont placées au même niveau ou s'étendent à l'extérieur de la surface dudit panneau, dalle ou tuile (10), ledit panneau ou dalle ou tuile (10) étant fabriqué par un procédé selon l'une quelconque des revendications précédentes.
